Europäisches Patentamt

European Patent Office

Office européen des brevets

(19)

(11) **EP 0 590 390 B1**

(12) **EUROPÄISCHE PATENTSCHRIFT**

(45) Veröffentlichungstag und Bekanntmachung des Hinweises auf die Patenterteilung:
**19.02.1997 Patentblatt 1997/08**

(51) Int Cl.6: **C08L 55/02**, C08K 3/34

(21) Anmeldenummer: **93114575.9**

(22) Anmeldetag: **10.09.1993**

(54) **Formmassen aus ABS-Polymerisaten und Alumosilikaten sowie die daraus erhältlichen Formkörper und Verfahren zu deren Herstellung**

Moulding compositions of ABS polymers and aluminosilicates, mouldings obtainable therefrom and process for their production

Masses de Moulage à base de polymères ABS et d'aluminosilicates, articles moulés obtenus à partir de celles-ci et procédé pour leur préparation

(84) Benannte Vertragsstaaten:
**DE ES FR GB IT**

(30) Priorität: **23.09.1992 DE 4231773**

(43) Veröffentlichungstag der Anmeldung:
**06.04.1994 Patentblatt 1994/14**

(73) Patentinhaber: **BAYER AG**
**51368 Leverkusen (DE)**

(72) Erfinder:
• **Eichenauer, Herbert, Dr.**
**D-41539 Dormagen (DE)**
• **Ooms, Pieter, Dr.**
**D-47800 Krefeld (DE)**
• **Buysch, Hans-Josef, Dr.**
**D-47809 Krefeld (DE)**
• **Pischtschan, Alfred, Dr.**
**D-51515 Kürten-Eichhof (DE)**
• **Wulff, Claus, Dr.**
**D-47800 Krefeld (DE)**

(56) Entgegenhaltungen:
**EP-A- 0 472 344**        **DE-A- 4 129 950**
**US-A- 4 814 364**

• **Week 9245, Derwent Publications Ltd., London, GB; AN 92-368599 & JP-A-4 268 354 (KYODO YAKUHIN) 24. September 1992**
• **Week 9144, Derwent Publications Ltd., London, GB; AN 91-321675 & JP-A-03 215 555 (UBE INDUSTRIES) 20. September 1991**
• **Week 9245, Derwent Publications Ltd., London, GB; AN 92-368599 & JP-A-4 268 354**
• **Week 9144, Derwent Publications Ltd., London, GB; AN 91-321675 & JP-A-03 215 555**

**Beschreibung**

Gegenstand der Erfindung sind Mischungen aus ABS-Polymerisaten und Alumosilikaten, die bei der thermoplastischen Verarbeitung durch Extrusion und Spritzguß Formkörper mit verbessertem Farbton und sehr guten sonstigen Eigenschaften ergeben, wobei gegebenenfalls die üblichen Additive und/oder andere Thermoplaste und/oder weitere Schlagzähmodifikatoren mitverwendet werden können.

ABS-Polymerisate sind ursprünglich Zweiphasenkunststoffe aus

1. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Harz-Matrix bezeichnet, bildet die äußere Phase;

2. mindestens einem Pfropfpolymerisat, welches hergestellt worden ist durch Pfropfpolymerisation eines oder mehrerer der unter 1. genannten Monomere auf ein Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die unter 1. und 2. genannten Polymerisate und ihre Mischung sind bekannt, ebenfalls Verfahren zu ihrer Herstellung (z.B. Emulsions-, Lösungs-, Masse-, Suspensions-, Fällungspolymerisation oder Kombinationen). Im folgenden wird die Bezeichnung ABS in einem erweiterten, unten definierten Sinn gebraucht.

Bei der thermoplastischen Verarbeitung von ABS-Polymerisaten können durch zu hohe Temperaturen, z.B. bei der Herstellung großflächiger Teile, Gelb- oder Braunverfärbungen auftreten. Üblicherweise werden, um das zu verhindern, zur Verbesserung des Rohtons (der ursprünglichen Farbs) von ABS-Polymerisaten stabilisierende Additive zugesetzt (vgl. EP-PS 0 176 811). Diese Additive, die in der Regel organische Verbindungen darstellen, beeinträchtigen jedoch oft die mechanischen Eigenschaften (wie Zähigkeit, Härte), die Wärmeformbeständigkeit oder die Verarbeitbarkeit der damit ausgerüsteten ABS-Formmassen. Es bestand daher ein Bedarf an hochwirksamen Additiven, die diese Nachteile nicht aufweisen, d.h., bei deren Zusatz in sehr geringen Mengen der Farbton unter Beibehaltung der sonstigen Eigenschaften verbessert wird.

Die Erfindung betrifft daher ABS-Formmassen, die auch nach der Verarbeitung zum fertigen Formteil einen verbesserten Farbton aufweisen, ohne Beeinträchtigung der sonstigen Eigenschaften der Polymerisate.

Es wurde nun gefunden, daß dies mit einem Zusatz von Alumosilikaten gelingt.

Alumosilikate im Sinne der Erfindung sind Zeolithe und Tonerden (Schichtsilikate).

Bei den erfindungsgemäß einzusetzenden Zeolithen handelt es sich um kristalline Alumosilikate, synthetisiert oder natürlich vorkommend, mit Gerüststruktur (siehe D.W. Breck in "Zeolithe Molecular Sieves", Wiley Interscience, 1974, S. 133-180; Ullmanns Enzyklopädie der technischen Chemie, 4. Auflage, Band 17, S. 9-18, Verlag Chemie, Weinheim, New York).

Geeignete Zeolithe sind insbesondere Verbindungen der allgemeinen Formel

$$M_{2/n}O \cdot Al_2O_3 \cdot xSiO_2 \cdot yH_2O$$

in welcher

M für Protonen oder Metallkationen der Gruppe Ia, IIa, IIIa, IVa, Va, VIa, VIIa, VIIIa, Ib, IIb, IIIb und IVb, des Periodensystems bevorzugt für Protonen oder Metallkationen der Gruppen Ia, IIa, IIb, IIIb, IVa und IVb, besonders bevorzugt für Protonen oder Metallkationen der Gruppe Ia, IIa, IIb, IIIb, ganz besonders bevorzugt für Protonen oder die Ionen $Na^+$, $K^+$, $Ca^{2+}$, $Mg^{2+}$ und $Zn^{2+}$ steht,

n für die Wertigkeit des Kations steht,

x für das Mol-Verhältnis $SiO_2/Al_2O_3$ steht, wobei x eine Zahl von 1,0 bis 50,0, bevorzugt 2,0 bis 25,0 sein kann, und

y für eine Zahl von 0 bis 9 steht.

Das zugrundeliegende Periodensystem ist die CAS-Version (siehe Periodic Table of the Elements in Handbook of Chemistry and Physics, 71. Edition (1991), Seite I-10, CRC Press, Boca Raton -Ann Arbor-Boston).

Geeignet für die erfindungsgemäßen Formmassen sind Zeolithe der Struktur A, X, Y (Faujasit-Typ), L, ZSM 5, 11, 22, 23, Mordenit, Offretit, Phillipsit, Sodalith, Omega und zeolithähnliche Materialien wie AlPO's und SAPO's, besonders geeignet sind Zeolithe der Struktur A, X, Y (Faujasit-Typ), ZSM 5, 11, L, Mordenit, Offretit, Omega und SAPO 5, 11, ganz besonders geeignet sind Zeolithe der Struktur A, X, Y (Faujasit-Typ), ZSM 5 und Mordenit.

Die erfindungsgemäß einzusetzenden Tonerden sind bekannt, siehe z.B. Kirk-Othmer "Encyclopedia of Chemical Technology" 2nd Ed. 1964, Vol. 5, S. 541 bis 561.

Erfindungsgemäß geeignet sind, wie in dem genannten Artikel klassifiziert, z.B. <u>Kaolin</u>-Typen wie Kaolinit, Dickerit, Nacrit (alle $Al_2O_3 \cdot 2 SiO_2 \cdot 2 H_2O$), Anauxit ($Al_2O_3 \cdot 3 SiO_2 \cdot 2 H_2O$), Halloysit ($Al_2O_3 \cdot 2 SiO_2 \cdot 2 H_2O$), Endellit ($Al_2O_3 \cdot 2 SiO_2 \cdot 4 H_2O$) sowie durch Erhitzen aus den Kaolin-Typen hergestellte Spinel-Typen.

Ferner <u>Serpentin</u>-Typen, in denen - ausgehend von den Kaolin-Typen - 2 Al-Ionen durch 3 Mg-Ionen ersetzt sind ($Mg_3Si_2O_5(OH)_4$). Zu den Serpentin-Typen gehören ferner Amesit ($^-(Mg_2Al)(SiAl)O_5(OH)_4$) und Cronstedit ($Fe_2^{2+}Fe^{3+}$) ($SiFe^{3+})O_5(OH)_4$ sowie Chamosit ($Fe^{2+}$,Mg)$_{2.3}$ ($Fe^{3+}Al)_{0.7}$ ($Si_{1.14}Al_{0.86})O_5(OH)_4$ sowie die z.T. auch synthetisch zugänglichen Nickel- oder Kobaltspezies.

Weiterhin können Alumosilikate des <u>Montmorillonit</u>-Typs eingesetzt werden wie z.B.

| | |
|---|---|
| Montmorillonit | $[Al_{1.67}Mg_{0.33}(Na_{0.33})]Si_4O_{10}(OH)_2$ |
| Beidellit | $Al_{2.17}[Al_{0.33}(Na_{0.33})]Si_{3.17}]O_{10}(OH)_2$ |
| Nontronit | $Fe^{3+}[Al_{0.33}(Na_{0.33})]Si_{3.67}]O_{10}(OH)_2$ |
| Hectorit | $Mg_{2.67}Li_{0.33}(Na_{0.33})]Si_4O_{10}(OH,F)_2$ |
| Saponit | $Mg_{3.0}[Al_{0.33}(Na_{0.33})]Si_{3.67}]O_{10}(OH)_2$ |
| Sauconit | $[Zn_{1.48}Mg_{0.14}Al_{0.74}Fe^{3+}][Al_{0.99}Si_{3.01}]O_{10}(OH)_2X_{0.33}$ (X = Halogen) |

sowie $Cu^{2+}$, $Zn^{2+}$ oder $Ni^{2+}$-haltige Typen wie Volkonskoit, Medmontit oder Pimelit.

Diese Tonerden können einzeln oder als Gemische von 2 oder mehreren verwendet werden und können die für diese Naturprodukte üblichen Verunreinigungen enthalten, wie sie z.B. in Bentonit üblich sind (= Montmorillonite mit Resten Feldspat, Quarz etc.).

Bevorzugt sind die als "Montmorillonit-Typen" beschriebenen Tonerden und besonders bevorzugt Montmorillonit selbst.

Die beschriebenen Alumosilikate können in nativer Form, teilgetrocknetem Zustand oder gegebenenfalls auch sauer aktiviert eingesetzt werden. Die saure Aktivierung wird durch die Behandlung mit Säuren, bevorzugt Mineralsäuren, vorgenommen.

Es können auch beliebige Mischungen der vorgenannten Zeolithe und/oder Tonerden eingesetzt werden.

ABS-Polymerisate im Sinne der Erfindung enthalten 5 bis 100 Gew.-%, vorzugsweise 5 bis 80 Gew.-%, eines Pfropfpolymerisats und 95 bis 0 Gew.-%, vorzugsweise 95 bis 20 Gew.-%, eines thermoplastischen Copolymerharzes.

Pfropfpolymerisate im Sinne der Erfindung sind solche, in denen auf einen Kautschuk (Pfropfgrundlage) Styrol oder Methylmethacrylat oder eine Mischung von 95 bis 50 Gew.-% Styrol, $\alpha$-Methylstyrol, kernsubstituiertem Styrol, Methylmethacrylat oder Mischungen daraus und 5 bis 50 Gew.-% Acrylnitril, Methacryinitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen $\leq 10°C$, z.B. Polybutadien, Styrol-Butadien-Copolymerisate, Acrylnitril-Butadien-Copolymerisate, Polyisopren, Alkylacrylatkautschuke wie z.B. Poly-n-butylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschukgewicht) vernetzend wirkender ethylenisch ungesättigter Monomerer enthalten. Solche Vernetzer sind z.B. Alkylendiol-di-acrylate und -methacrylate, Polyesterdiacrylate und -methacrylate, Divinylbenzol, Trivinylbenzol, Triallylcyanurat, Allylacrylat und -methacrylat, Butadien oder Isopren.

Pfropfgrundlage können auch Acrylatkautschuke mit Kern/Mantel-Struktur sein, mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nicht-konjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können. Bevorzugt sind Polybutadien und Alkylacrylatkautschuke.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-% pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von 0,05 bis 20,0 $\mu m$, bevorzugt von 0,1 bis 2,0 $\mu m$ und besonders bevorzugt von 0,1 bis 0,8 $\mu m$, vor.

Derartige Pfropfcopolymerisate können durch radikalische Pfropfcopolymerisation von Monomeren aus der Reihe Styrol, $\alpha$-Methylstyrol, kernsubstituiertem Styrol, (Meth)-Acrylnitril, Methylmethacrylat, Maleinsäureanhydrid, N-substituiertes Maleinimid in Gegenwart der zu pfropfenden Kautschuke hergestellt werden. Bevorzugte Herstellungsverfahren für solche Pfropfcopolymerisate sind die Emulsions-, Lösungs-, Masse- oder Suspensionspolymerisation.

Die thermoplastischen Copolymerisate können aus den Pfropfmonomeren oder ähnlichen Monomeren aufgebaut sein, insbesondere aus wenigstens einem Monomeren aus der Reihe Styrol, $\alpha$-Methylstyrol, Halogenstyrol, Acrylnitril, Methacrylnitril, Methylmethacrylat, Maleinsäureanhydrid, Vinylacetat und N-substituiertes Maleinimid. Es handelt sich bevorzugt um Copolymerisate aus 95 bis 50 Gew.-% Styrol, $\alpha$-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus. Solche Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder $\alpha$-Methylstyrol mit Acrylnitril, gegebenenfalls in Mischung mit Methylmethacrylat.

Besonders bevorzugte Copolymerisate bestehen aus 20 bis 40 Gew.-% Acrylnitril und 80 bis 60 Gew.-% Styrol oder $\alpha$-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen vorzugsweise mittlere Molekulargewichte (Gewichtsmittel) $\overline{M}_w$ von 15000 bis $2 \cdot 10^5$.

Die erfindungsgemäßen Formmassen enthalten mindestens ein ABS-Polymerisat und eip oder mehrere Alumosilikate in Mengen von 0,01 bis weniger als 0,5 Gew.-%, vorzugsweise von 0,05 bis 0,5 Gew.-% (jeweils bezogen auf ABS-Polymerisat).

Neben den erfindungsgemäßen Verbindungen können die Formmassen übliche Zusätze wie Pigmente, Füllstoffe, Stabilisatoren, Antistatika, Gleitmittel, Entformungsmittel, Flammschutzmittel enthalten.

Gegenstand der Erfindung ist auch ein Verfahren zur Herstellung der erfindungsgemäßen ABS-Polymerisat-Formmassen mit verbessertem Farbton und guten sonstigen Eigenschaften.

Dazu gibt man 0,01 bis weniger als 0,5 Gew.-%, vorzugsweise 0,05 bis 0,5 Gew.-% (jeweils bezogen auf ABS-Polymerisat) eines oder mehrerer Alumosilikate zu mindestens einem der oben beschriebenen ABS-Polymerisate und vermischt bei höheren Temperaturen, insbesondere bei 100°C bis 280°C in üblichen Mischaggregaten, z.B. in Knetern, Innenmischern, auf Walzenstühlen, Schneckenmaschinen oder Extrudern.

Dabei können Verweilzeiten je nach Intensität der Durchmischung von 10 Sekunden bis 30 Minuten erforderlich sein.

Beispiele

Eingesetzte Polymerisate:

A) Pfropfprodukt, bestehend aus 50 Gew.-% Polybutadien mit einem mittleren Teilchendurchmesser ($d_{50}$) von 0,4 µm, auf das 36 Gew.-% Styrol und 14 Gew.-% Acrylnitril pfropfpolymerisiert wurden.

B) Styrol/Acrylnitril (SAN) = 72 : 28-Copolymerisat mit einem mittleren Molekulargewicht (Gewichtsmittel) $\overline{M}_W$ von ca. 115.000 und einer molekularen Uneinheitlichkeit $\overline{M}_w/\overline{M}_n$ -1 $\leq$ 2

Eingesetzte Alumosilikate:

C) Na, K-Zeolith A (Baylith L)
D) Ca-Zeolith A
E) Na-Zeolith A
F) Na-Zeolith X

Beispiele 1 bis 5

Die in Tabelle 1 angegebenen Mengen Alumosilikat wurden in einem Innenkneter mit einem Gemisch aus 40 Gew.-Teilen Polymer A und 60 Gew.-Teilen Polymer B sowie 2 Gew.-Teilen Pentaerythrittetrastearat bei 180 bis 200°C innerhalb von 3 bis 5 Minuten vermischt, dann das resultierende Gemisch granuliert und anschließend durch Spritzgießen bei 240°C und 280°C verarbeitet (75 Sekunden-Zyklus).

Die Eigenschaften der Formmassen wurden an bei 240°C hergestellten Prüfkörpern ermittelt. Die Kerbschlagzähigkeit wurde bei Zimmertemperatur ($a_k^{RT}$) nach ISO 180 A (Einheit kJ/m$^2$), die Kugeldruckhärte ($H_c$) nach DIN 53456 (Einheit N/mm$^2$), die Wärmeformbeständigkeit (Vicat B) nach DIN 53460 (Einheit °C) und die thermoplastische Fließfähigkeit durch Messung des MVI-Wertes nach DIN 53735u (Einheit cm$^3$/10 min) gemessen. Der Rohton wurde an bei 280°C hergestellten Plättchen visuell nach der Skala

++ =    sehr hell

EP 0 590 390 B1

+ =        hell

o =        mittel

- =        dunkel

-- =        sehr dunkel

beurteilt.

Wie aus den Beispielen zu erkennen ist, weisen die er-findungsgemäßen Formmassen einen sehr hellen Rohton unter Erhalt der sonstigen Eigenschaften auf.

Tabelle 1:

| Zusatzmengen der Alumosilikate | | | | |
|---|---|---|---|---|
| Formmasse | C Gew.- Teile | D Gew.- Teile | E Gew.- Teile | F Gew.- Teile |
| 1 | 0,05 | - | - | - |
| 2 | 0,1 | - | - | - |
| 3 | 0,25 | - | - | - |
| 4 (Vergleich) | - | - | - | - |

Tabelle 2:

| Prüfdaten der Formmassen | | | | | |
|---|---|---|---|---|---|
| Form- | $a_k^{RT}$ (kJ/m$^2$) | $H_c$ (N/mm$^2$) | Vicat B (°C) | MVI (cm$^3$/10min) | Rohton 280°C |
| 1 | 34 | 85 | 100 | 7,0 | + |
| 2 | 31 | 85 | 99 | 6,9 | ++ |
| 3 | 28 | 85 | 100 | 7,1 | ++ |
| 4 (Vergleich) | 34 | 85 | 100 | 6,8 | - |

**Patentansprüche**

**1.** Thermoplastische Formmassen bestehend im wesentlichen aus einem ABS-Polymerisat und 0,01 bis weniger als 0,5 Gew.-% (bezogen auf ABS-Polymerisat) eines bzw. mehrerer Alumosilikate der Formel I

$$M_{2/n}O \cdot Al_2O_3 \cdot xSiO_2 \cdot yH_2O$$

in welcher

M    für Protonen oder Metallkationen der Gruppe Ia, IIa, IIIa, IVa, Va, VIa, VIIa, VIIIa, Ib, IIb, IIIb und IVb, steht,

n    die Wertigkeit des Kations bedeutet,

x    für das Mol-Verhaltnis $SiO_2/Al_2O_3$ = 1,0 bis 50 steht, und

y    für eine Zahl von 0 bis 9 steht,

oder Tonerden des Kaolin-, Serpentin-, Montmorillonit- und Bentonit-Typs.

**2.** Thermoplastische Formmassen nach Anspruch 1 enthaltend ein ABS-Polymerisat folgender Zusammensetzung:

1. 5 bis 100 Gew.-% eines Pfropfmischpolymerisats, hergestellt durch Pfropfpolymerisation von

1.1. 5 bis 90 Gew.-% einer Mischung aus

5

1.1.1 5 bis 50 Gew.-% (Meth)Acrylnitril, Maleinsäureanhydrid, N-substituierte Maleinimide oder Mischungen daraus und

1.1.2 95 bis 50 Gew.-% Styrol $\alpha$-Methylstyrol, kernsubstituiertes Styrol, Methylmethacrylat oder Mischungen daraus auf

1.2. 95 bis 10 Gew.-% eines Kautschuks mit einer Glasübergangstemperatur $\leq$ 10°C;

2. 95 bis 0 Gew.-% eines Thermoplastischen Copolymerisatharzes.

3. Thermoplastische Formmassen nach Anspruch 1 enthaltend Alumosilikate der Formel

$$M_{2/n}O \cdot Al_2O_3 \cdot xSiO_2 \cdot yH_2O$$

in welcher

M     für Protonen oder die Ionen $Na^+$, $K^+$, $Ca^{2+}$, $Mg^{2+}$ und $Zn^{2+}$ steht,

n     die Wertigkeit des Kations bedeutet,

x     für das Mol-Verhaltnis $SiO_2/Al_2O_3$ = 2,0 bis 25,0 steht, und

Y     für eine Zahl von 0-9 steht.

4. Thermoplastische Formmassen gemäß Anspruch 1 enthaltend als Alumosilikate die Zeolithe Na-A, K-A, Na,K-A, Ca-A, Mg-A, Na-X, Na-Y, Ca-X, Ca-Y, Mg-X, Mg-Y, Na-ZSM-5, K-ZSM-5, Na-L, K-L, Ca-L, Mg-L, H-Y, H- ZSM-5, H-L oder Montmorillonit oder Mischungen daraus.

5. Verfahren zur Herstellung von ABS-Formmassen, dadurch gekennzeichnet, daß man 0,01 bis weniger als 0,5 Gew.-% (bezogen auf ABS-Polymerisat) eines oder mehrerer Alumosilikate zu einem ABS-Polymerisat gibt und bei einer Temperatur von 100°C bis 280°C innig vermischt.

## Claims

1. Thermoplastic moulding compositions substantially consisting of an ABS polymer and 0.01 to less than 0.5 wt.% (relative to ABS polymer) or one or more aluminosilicates of the formula

$$M_{2/n}O \cdot Al_2O_3 \cdot xSiO_2 \cdot yH_2O$$

in which

M     denotes protons or metal cations of group Ia, IIa, IIIa, IVa, Va, VIa, VIIa, VIIIa, Ib, IIb, IIIb and IVb,

n     means the valency of the cation,

x     denotes the molar ratio $SiO_2/Al_2O_3$ = 1.0 to 50, and

y     denotes a number from 0 to 9,

or argillaceous earths of the kaolin, serpentine, montmorillonite and bentonite types.

2. Thermoplastic moulding compositions according to claim 1 containing an ABS polymer of the following composition:

1. 5 to 100 wt.% of a graft copolymer produced by graft copolymerising

1.1 5 to 90 wt.% of a mixture of

1.1.1 5 to 50 wt.% of (meth)acrylonitrile, maleic anhydride, N-substituted maleimides or mixtures thereof and

1.1.2 95 to 50 wt.% of styrene, $\alpha$-methylstyrene, ring-substituted styrene, methyl methacrylate or mixtures thereof onto

1.2 95 to 10 wt.% of a rubber having a glass transition temperature of $\leq 10°C$,

2. 95 to 0 wt.% of a thermoplastic copolymer resin.

3. Thermoplastic moulding compositions according to claim 1 containing aluminosilicates of the formula

$$M_{2/n}O \cdot Al_2O_3 \cdot xSiO_2 \cdot yH_2O$$

in which

M     denotes protons or the ions $Na^+$, $K^+$, $Ca^{2+}$, $Mg^{2+}$ and $Zn^{2+}$,

n     means the valency of the cation,

x     denotes the molar ratio $SiO_2/Al_2O_3 = 2.0$ to 25, and

y     denotes a number from 0 to 9.

4. Thermoplastic moulding compositions according to claim 1 containing as aluminosilicates the zeolites Na-A, K-A, Na,K-A, Ca-A, Mg-A, Na-X, Na-Y, Ca-X, Ca-Y, Mg-X, Mg-Y, Na-ZSM-5, K-ZSM-5, Na-L, K-L, Ca-L, Mg-L, H-Y, H-ZSM-5, H-L or montmorillonite or mixtures thereof.

5. Process for the production of ABS moulding compositions, characterised in that 0.01 to less than 0.5 wt.% (relative to ABS polymer) of one or more aluminosilicates is added to an ABS polymer and intimately mixed at a temperature of 100°C to 280°C.

**Revendications**

1. Masses à mouler thermoplastiques constituées essentiellement d'un polymère ABS et de 0,01 à moins de 0,5 % en poids (par rapport au polymère ABS), d'un ou plusieurs aluminosilicates de formule

$$M_{2/n}O . Al_2O_3 . xSiO_2 . yH_2O$$

où

M     représente des protons ou des cations métalliques des groupes Ia, IIa, IIIa, IVa, Va, VIa, VIIa, VIIIa, Ib, IIb, IIIb et IVb,

n     représente la valence du cation,

x     représente le rapport molaire $SiO_2/Al_2O_3 = 1,0$ à 50, et

y     représente un nombre de 0 à 9,

ou des argiles du type kaolin, serpentine, montmorillonite et bentonite.

2. Masses à mouler thermoplastiques selon la revendication 1 contenant un polymère ABS de composition suivante :

1. 5 à 100 % en poids d'un copolymère greffé, préparé par polymérisation de greffage de

1.1. 5 à 90 % en poids d'un mélange de

1.1.1. 5 à 50 % en poids de (méth)acrylonitrile, anhydride d'acide maléique, maléinimide N-substitué ou leurs mélanges et

1.1.2. 95 à 50 % en poids de styrène, α-méthylstyrène, styrène substitué sur le noyau, méthacrylate de méthyle ou leurs mélanges sur

1.2. 95 à 10% en poids d'un caoutchouc ayant une température de transition vitreuse inférieure ou égale à 10°C,

2. 95 à 0 % en poids d'une résine copolymère thermoplastique.

3. Masses à mouler thermoplastiques selon la revendication 1, contenant des aluminosilicates de formule :

$$M_{2/n}O . Al_2O_3 . xSiO_2 . yH_2O$$

où

M   représente des protons ou les ions $Na^+$, $K^+$, $Ca^{2+}$, $Mg^{2+}$ et $Zn^{2+}$,
n   représente la valence du cation,
x   représente le rapport molaire $SiO_2/Al_2O_3 = 2,0$ à 25,0, et
y   est un nombre compris entre 0 et 9.

4. Masses à mouler thermoplastiques selon la revendication 1 contenant comme aluminosilicates les zéolites Na-A, K-A, Na, K-A, Ca-A, Mg-A, Na-X, Na-Y, Ca-X, Ca-Y, Mg-X, Mg-Y, Na-ZSM-5, K-ZSM-5, Na-L, K-L, Ca-L, Mg-L, H-Y, H-ZSM-5, H-L ou la montmorillonite ou leurs mélanges.

5. Procédé de préparation de masses à mouler d'ABS, caractérisé en ce qu'on y incorpore intimement de 0,01 à moins de 0,5 % en poids (par rapport au polymère ABS) d'un ou plusieurs aluminosilicates dans un polymère ABS et à une température comprise entre 100°C et 280°C.